(19) Europäisches Patentamt
European Patent Office
Office européen des brevets

(11) Publication number: 0 027 302 A1

(12) # EUROPEAN PATENT APPLICATION

(21) Application number: 80300393.8

(51) Int. Cl.$^3$: H 04 M 1/31

(22) Date of filing: 11.02.80

(30) Priority: 10.10.79 US 83334

(43) Date of publication of application: 22.04.81 Bulletin 81/16

(84) Designated Contracting States: BE CH DE FR GB IT LU NL SE

(71) Applicant: Chiou, Suchi
5th fl. No.15 Lane 180 Ho-Chiang Street
Taipei(TW)

(72) Inventor: Chiou, Suchi
5th fl. No.15 Lane 180 Ho-Chiang Street
Taipei(TW)

(74) Representative: BAYLISS, Geoffrey Cyril et al,
BOULT, WADE & TENNANT 27 Furnival Street
London EC4A 1PQ(GB)

(54) **Interface circuits for touch-pulse telephones.**

(57) A touch-pulse telephone has an interface circuit comprising a power supply circuit of integrated circuit (IC) (703, 704, 705, 706, 707, 708, 719, 709, 710), a signal input circuit of IC hook switch (711, 713), a Mute circuit (720, 722, 721, 723) and a circuit for producing pulse signal (714, 718, 705, 704). Said IC power supply circuit which is connected in series with the transmitter of telephone set is installed in the handset. The signal input circuit of IC hook switch picked up by said power supply circuit as well as said Mute circuit are also stored in the handset. The circuit for producing pulse signal which is stored in the telephone set is connected to IC in the handset by a connecting wire. The wires of the cord between said telephone set and said handset will thus be simply reduced to four wires.

EP 0 027 302 A1

./...

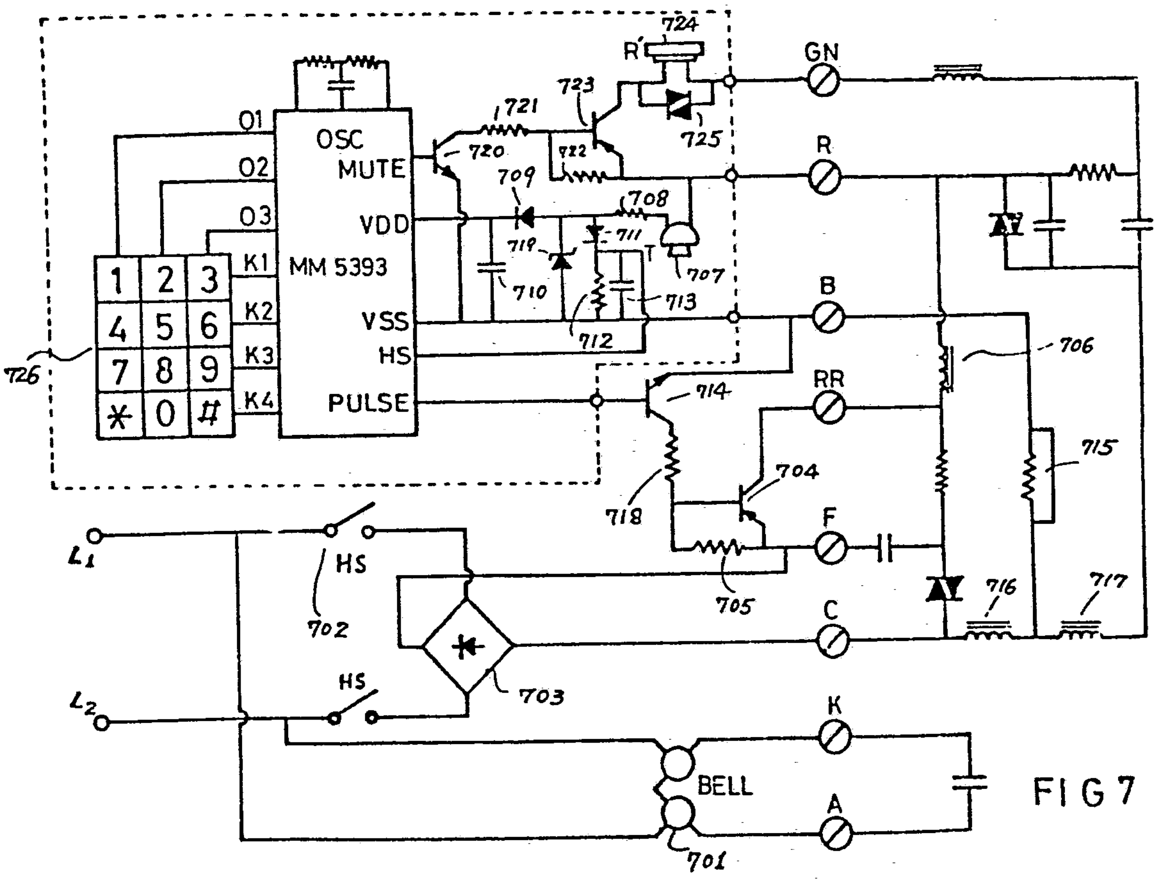

724
R'
GN
723
721
720
725
OSC
MUTE
O1
O2
O3
R
722
709
708
VDD
711
719
T
707
K1
MM 5393
710
713
K2
VSS
B
712
HS
706
726
K3
714
K4
PULSE
RR
715
704
718
F
L1
HS
705
702
C
716
717
703
L2
HS
K
BELL
A
701


FIG 7

INTERFACE CIRCUITS FOR TOUCH-PULSE TELEPHONES

This invention relates to touch-pulse telephones and in particular to interface circuits therefor.

The conventional telephone set may have a circuit diagram of standard K-500 as shown in Figure 1. The dotted line zone 103 on the right side of Figure 1 shows a telephone circuit having an inducation coil 104. The dotted line zone 105 on left side includes a hook switch HS. The dial is numbered as 100. Said dial is led to two connecting points, namely, dotted lines 106 and 107.

One connecting point 101 is inserted between RR and F so that the circuit is closed during "no dial" and the circuit will be intermittently contacted during dialing so as to issue the dialing pulse. Another connecting point 102 is used to conduct GN and R so that the circuit will be opened during normal "no dial" and will be closed during dialing so as to cancel the noise of break impulse.

The recent development of CMOS integrated circuits (IC) with low power consumption has contributed chips (IC) for use in telephone on line power. Typical integrated circuits may be used from products of The Motorola Company, for instance, MC 14408 or MC 14409 combined with MC 14419. Other ICs, such as: MM5393 of National Semiconductor Co. may also be used. The connection diagram of MM 5393 is shown in Figure 2, whereas the block diagram of MM 5393 is shown in Figure 4. Although these integrated circuits are made from different companies with different pins or applied voltage, they have the following fundamental functions:

(1) They are suitable for a keyboard having 12 inputs (4x3). The dailing points of said keyboard are as shown in Figure 3 and comprise 3 columns, O1, O2, O3, and 4 rows, K1, K2, K3, K4. There are 12 contacts among the rows and columns. Each contact may represent one signal input. Said input may be digit number, 1,2,3,4,5,6,7,8,9,0 and two functional input, * and #.

(2) There are signal inputs from the hook switch. As shown in Figure 2, the fifth pin, HS of MM 5393 may have the signal input to the integrated circuit after hanging up the receiver in order to re-set its internal circuit. When holding the receiver, the input signal may be delivered into the integrated circuit ready for accepting a dialing or re-dial signal.

(3) There is an output of dialing pulses as shown in Figure 2. The ninth pin, pulse of MM 5393 may produce the pulse signal suitable for a dialing pulse through another pin of said IC after accepting the signal from the keyboard and after being arranged by the internal logic circuit. Said pulse signal may actuate the transistor of the interface circuit for intermittent contact with respect to said pulse. The dialing pulse may then be sent to the telephone exchange to substitute with the connecting point 101 of dial as shown in Figure 1.

(4) There is output to cancel the noise of break impulse by the eleventh pin, Mute of MM 5393 as shown in Figure 2. The integrated circuit after receiving the signal from keyboard may issue the dialing pulse and Mute signal to make the transistor of the interface circuit unsaturation to have high resistance. The circuit of the receiver will be broken to make no interference to the receiver for Mute effect and to substitute with the connecting point 102 of the dial shown in Figure 1.

The chip especially used in telephone set requires an interface circuit as produced by National Semiconductor Company. The circuit in Figure 5 may be directly used in the K-500 telephone circuit to substitute with the original mechanical dialing circuit. The design is based on the traditional telephone set and the keyboard which is used to substitute with the dial of old telephone is installed on the telephone set. It is difficult to install the keyboard on the handset because the induction coil necessarily provided in the circuit of a K-500 telephone has a substantial volume and heavy weight. The hook switch should also be stored in the telephone set. If it were necessary to install the keyboard onto said handset having circuit of Figure 5, the wires of the cord between handset and telephone set would be increased whereby the telephone structure will be complex and its application would not be economic.

Several simplified interface circuits found in the market tend to reduce the number of wires in the handset. An example which may be given is that of Figure 6 wherein the exchange line is led into telephone set through L1 and L2. Besides the line directly connected to bell 205, the entrance line is rectified by rectifier 206 and then led to terminal C and F on right side of K-500 circuit through the hook switch HS. The power of IC is first treated by resistor 208 to reduce the voltage and then passed through voltage regulator composed of Zener diode 203 and filter capacitor 207. The circuit within the dotted line is installed in the handset. The keyboard 202 may deliver the signal to MM 5393, 209. The pulse 210 may issue the dialing pulse to act the transistor 212 so as to make intermittent contacts between RR and F of K-500 telephone set for output of dialing pulse.

Whenever the pulse of IC issues the dialing signal, the Mute of IC simultaneously issues a signal to change the transistor to unsaturation (open). The circuit to receiver 214 of handset may be cut off to have Mute effect.

Although the interface circuit has been simplified as above-mentioned, the connecting wires between the handset and telephone set, such as: GN, R, B, RR, F, C and the power line of IC, $V_{DD}$ are still seven.

The number of wires for the handset of conventional telephone set are four. If they are changed to be seven wires, the handset should be otherwise made and the sockets for handset must be newly made. The structure of handset and the shell of telephone set must be further revised or modified to meet the requirement of cord having 7 wires. The telephone subscribers may also increase their troubles or difficulties of maintenance. It is thus inconvenient and uneconomic in use.

The object of the present invention is thus to provide a simplified interface circuit for touch-pulse telephone in which the keyboard is installed on the handset and the number of connecting wires between said handset and said telephone set is the same as that of a conventional telephone handset cord.

The present invention provides a touch pulse telephone having an interface circuit comprising: a power supply circuit of integrated circuit (IC), a signal input circuit of IC hook switch, a Mute circuit and a circuit for producing pulse signals, said power supply circuit of IC which is connected in series with the transmitter of the telephone set being installed in a handset of said telephone, said signal input circuit of IC hook switch which is picked up by said power supply circuit being installed in the handset, said Mute circuit being also stored in the handset and said circuit for producing pulse signals which is stored in the telephone set being connected to IC in the handset by a wire so that the handset cord requires only four wires.

One embodiment of the invention will now be described in detail, with reference to the accompanying drawings, in which:

Figure 1 is the circuit diagram of standard K-500 telephone.

Figure 2 is the connection diagram of IC MM 5393 produced by National Semiconductor Company.

Figure 3 is the diagram of keyboard of conventional telephone set.

Figure 4 is the block diagram of IC MM 5393.

Figure 5 is the diagram of interface circuit of MM 5393.

Figure 6 is the diagram of simplified interface circuit of commercial IC MM 5393.

Figure 7 is the circuit diagram of the present invention based on the circuit of MM 5393.

As shown in Figure 7, a telephone exchange line is connected to terminals L1 and L2 and then connected to bell 701 to receive the running signal from the telephone exchange. The telephone line is also connected through hook switch HS702. Then it is rectified by rectifier 703 to stabilize the voltage polarity. The positive end is connected to point F in the K-500 circuit. The negative end is connected to point C so that the transistor 704 between the terminal F and RR may be saturated to energize the circuit of K-500 ready for communication.

On lifting the handset, the hook switch 702 is closed. The resulting current passed is rectified by rectifier 703 and then passing the resistor 705 with little current which makes the transistors 714 and 704 reach saturation to form a closed circuit. The current then passes terminal RR, induction coil 706, terminal R, transmitter of handset 707, resistor 708 and diode 709 to charge the capacitor 710. The voltage for IC 5393 is so low that the power needed for $V_{DD}$ and $V_{SS}$ of IC is readily provided.

Another circuit is led through resistor 708, diode 711 and then to capacitor 713. This is to establish a voltage input into IC for a signal input of the hook switch to express that the handset is held and the internal circuit of IC gets ready to accept the dialing or re-dial signal with respect to the input signal of voltage. According to the characteristics of MM 5393, the ninth pin, Pulse is at higher level of voltage than that of $V_{SS}$ when IC has been conducted and not yet received the dialing signal from keyboard. The circuit may be conducted from Pulse through base of transistor 714, emitter of transistor 714 to terminal B of K-500. As the resistor 715 in circuit of K-500 has been closed and point B is thus directly conducted between induction coil 716 and 717 and finally backed to terminal C. The transistor 714 will thus be saturated by the forward bias. After the transistor 714 is saturated, the current will pass from terminal F (Positive end) through resistor 705, 718, collector of transistor 714, emitter of 714 to terminal B so as to form potential difference on both sides of resistor 705. Said potential difference will afford the transistor 704 forward bias for its saturation so as to conduct the terminal F and RR and to energize the circuit of K-500. The current will pass from positive end, terminal F, through transistor 704, terminal RR, induction coil 706, terminal R, transmitter 707, resistor 708, Zener diode 719, terminal B, induction coil 716 to terminal C (negative). A constant voltage will then be maintained between both sides of Zener diode 719. The power supply will then be led into IC through diode 709.

When diode has not yet received the dialing signal, the potential of Mute is high, the transistor 720 will be saturated by the forward bias. Once the transistor 720 is saturated, the current will flow from terminal R (positive) through resistor 722, 721, transistor 720 (collector, then emitter) to terminal B (negative) to saturate the transistor 723 so as to conduct circuit between terminal R and the receiver 724 from which the dialing sound will be heard.

Whenever dialing the telephone, the dialing keyboard 726 will be depressed and the ninth pin, Pulse of IC will issue the dialing pulse and will become low voltage then. Instantaneously, the base of transistor 714 may be cut off and may lose the positive bias. The current passing through resistor 705 and transistor 704 (emitter ⟶ base) will be broken whereby the transistor 704 will lose its bias current and be cut off. The circuit between F and RR will then be opened. If the pulse of ninth pin is restored to its high level to conduct the circuit between terminal F and RR, the dialing pulse will then be issued.

When depressing the function key, such as the re-dial key, the ninth pin will issue the repeated dialing number.

When the ninth pin Pulse issues the dialing pulse, the voltage of the ninth pin, Mute will become low. Transistor 720 will lose the forward bias as being cut off. It will cut off the forward bias between resistor 722 and transistor 723 (emitter ——→ base) so that the transistor 723 will also be cut off and the current passing to the transmitter will be broken. The noise of the break impulse can not be heard from receiver to obtain the Mute effect.

When hanging up the hand set, the IC MM 5393 will lose the power supply. However, the energy-stored capacitor 710 which is connected in parallel with $V_{DD}$ and $V_{SS}$ will store enough electric energy which is durable for a period even after hanging up the handset for re-dial of the last number kept in the memory. As IC only consumes little current, the energy-stored capacitor will supply the energy to IC for at least 3 hours. It is enough in practical application.

After hanging up the handset, the IC power source is broken. The energy-stored capacitor 710, as isolated by diode 709, will make capacitor 713 "low" level as its electric energy is consumed by resistor 712. Such a signal of low voltage will be put into fifth pin, HS of IC to re-establish its internal circuit ready for next dialing or re-dial.

All the components for the circuit in dotted line of Figure 7 are contained in the handset and are light and small. The wires contained in cord between handset and telephone set have been reduced to four wires. The telephone is thus installed without increasing its weight or volume.

CLAIMS:

1. A touch-pulse telephone having an interface circuit comprising: a power supply circuit (703, 705, 704, 706, 707, 708, 719, 709, 710) of integrated circuit (IC), a signal input circuit of IC hook switch (711, 713), a Mute circuit (720, 722, 721, 723) and a circuit for producing pulse signals (714, 718, 705, 704), said power supply circuit of IC which is connected in series with the transmitter (707) of the telephone set being installed in a handset of said telephone, said signal input circuit of IC hook switch which is picked up by said power supply circuit being installed in the handset, said Mute circuit being also stored in the handset and said circuit for producing pulse signals which is stored in the telephone set being connected to IC in the handset by a wire so that the handset cord requires only four wires.

2. A touch-pulse telephone according to Claim 1 wherein, said power supply circuit of integrated circuit comprising a Zener diode (719), an isolation diode (709) and an energy-stored capacitor (710), said isolation diode being connected in series with said energy-stored capacitor and then connected in parallel with said Zener diode, said circuit being connected in series with the transmitter (707) of telephone set so that the current passes through said transmitter to make a voltage on both sides of said Zener diode so as to charge the energy-stored capacitor through said isolation diode to build up power for said integrated circuit.

3. A touch-pulse telephone according to Claim 1 or Claim 2 wherein said signal input circuit of the hook switch comprises a diode (711), a resistor (712) and capacitor (713), said resistor being connected in parallel with said capacitor to form a delay circuit, said delay circuit being connected with said diode to form said signal input circuit which is connected in parallel with said Zener diode (719), said circuit being positioned before the isolation diode (709) ahead said energy-stored capacitor (710) so that IC will have "High"input when the hook switch (702) is closed and the voltage of power supply is increased; and the IC will have "Low" input as the voltage is reduced when said hook switch is opened and said isolation diode is intercepted.

GCB/SH/PC/

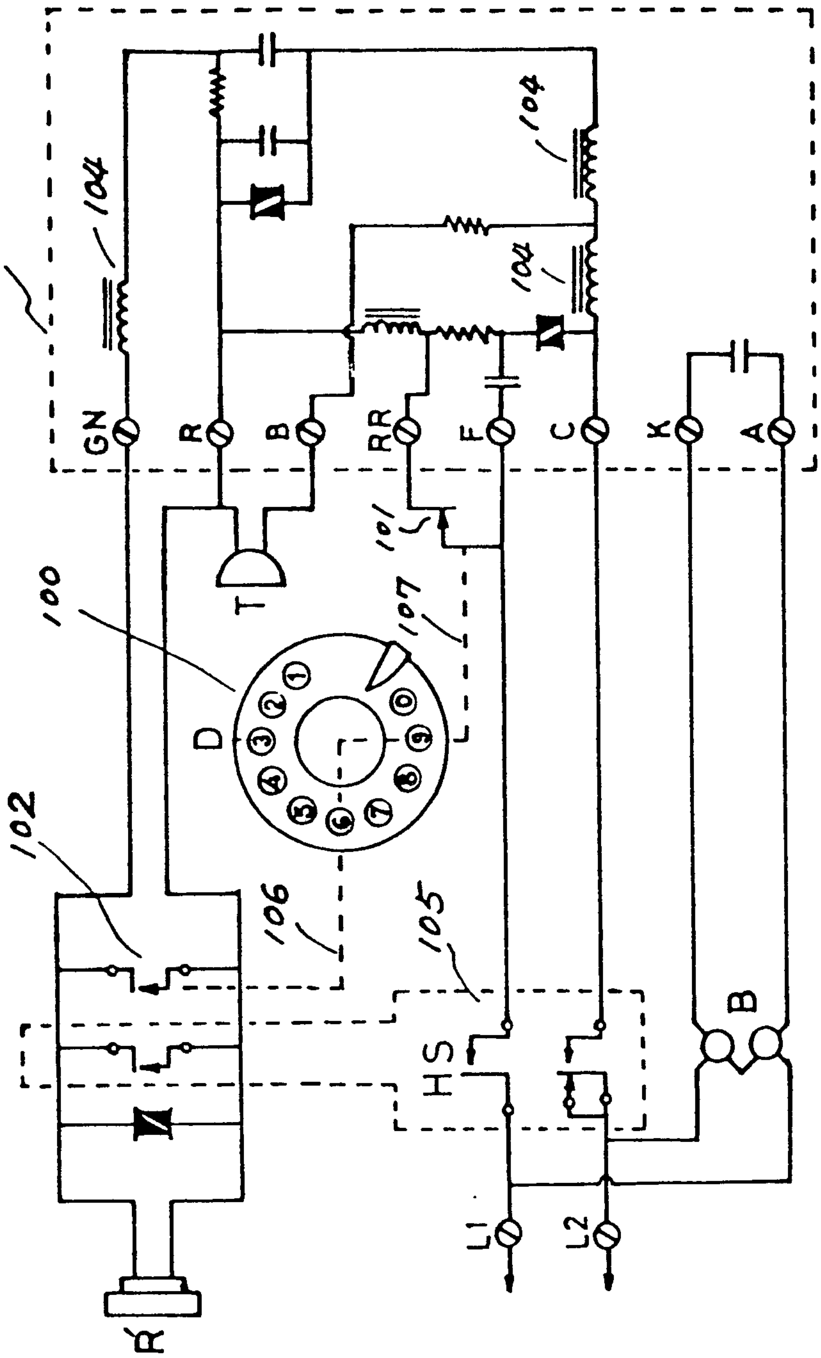
103
104
104
104
GN
R
B
RR
F
C
K
A
101
100
107
T
D
102
106
105
HS
B
L1
L2
R

FIG 1

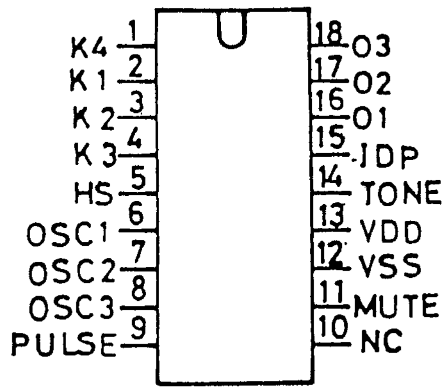


FIG 2

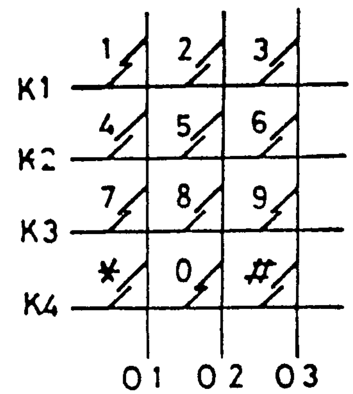


FIG 3

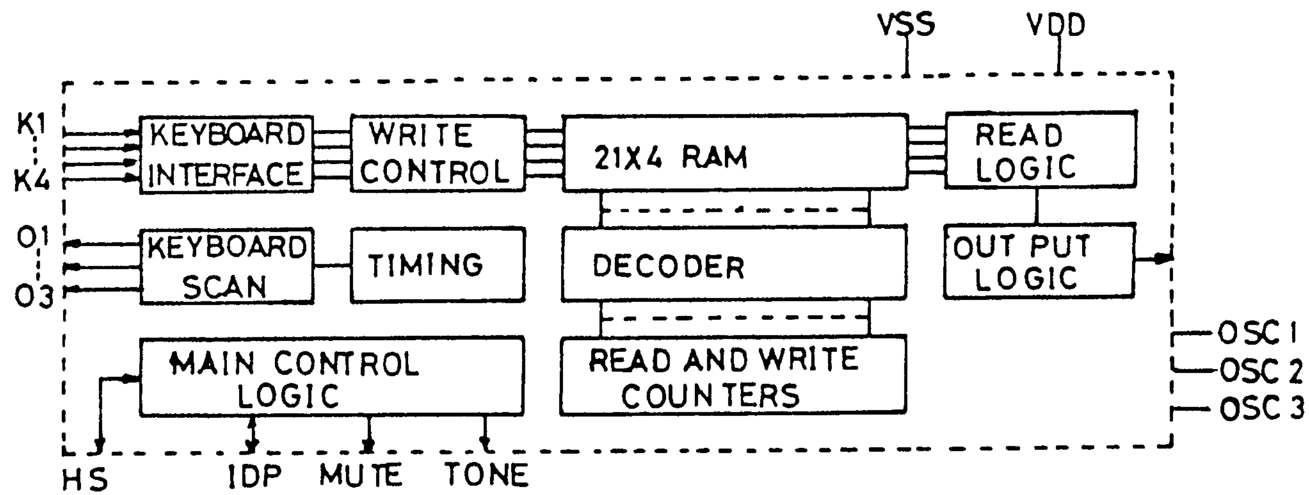


FIG 4

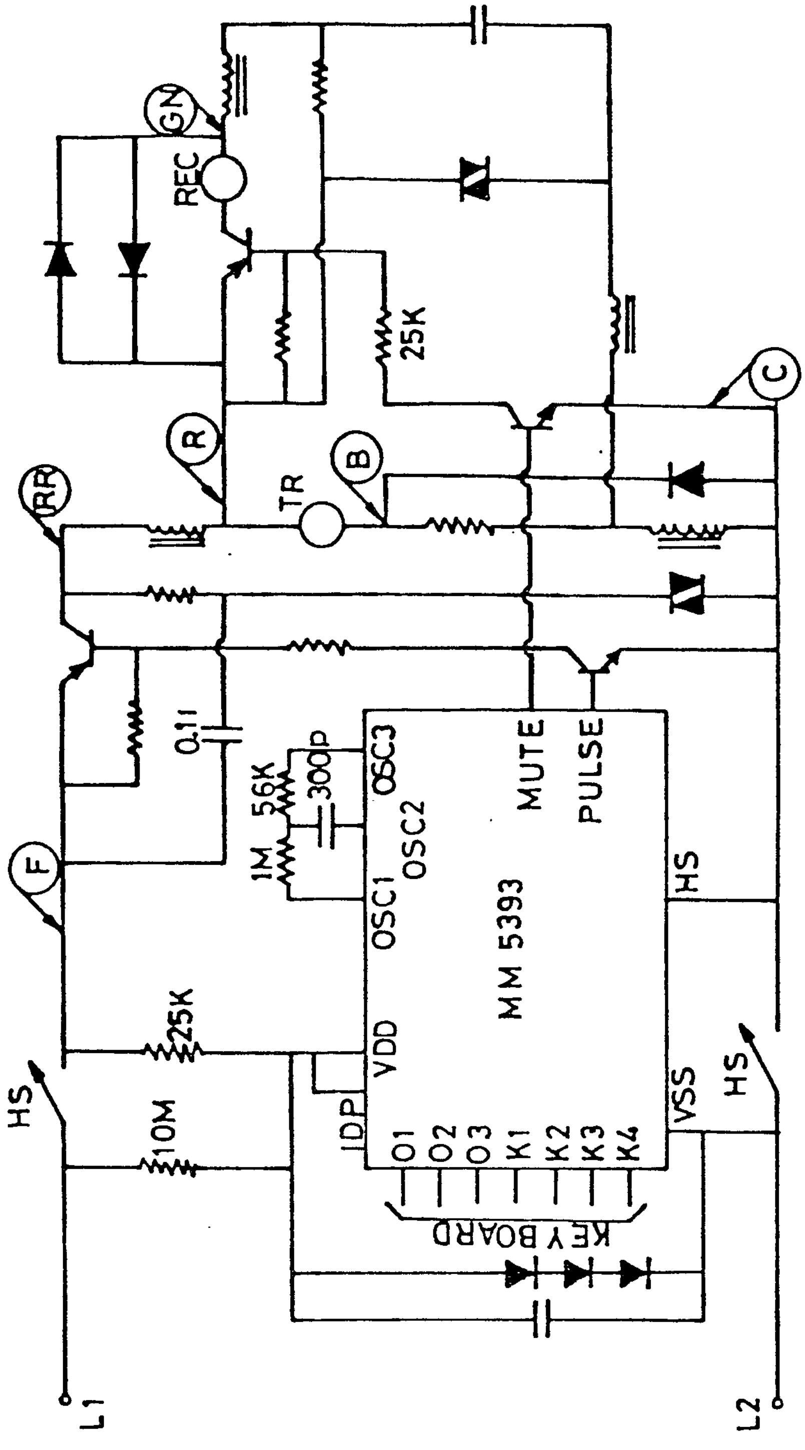

RR
R
GN
REC
TR
B
C
25K
F
0.1
56K
300p
1M
OSC1
OSC2
OSC3
MUTE
PULSE
MM 5393
HS
VDD
VSS
IDP
O1
O2
O3
K1
K2
K3
K4
KEY BOARD
10M
25K
HS
HS
L1
L2


FIG 5

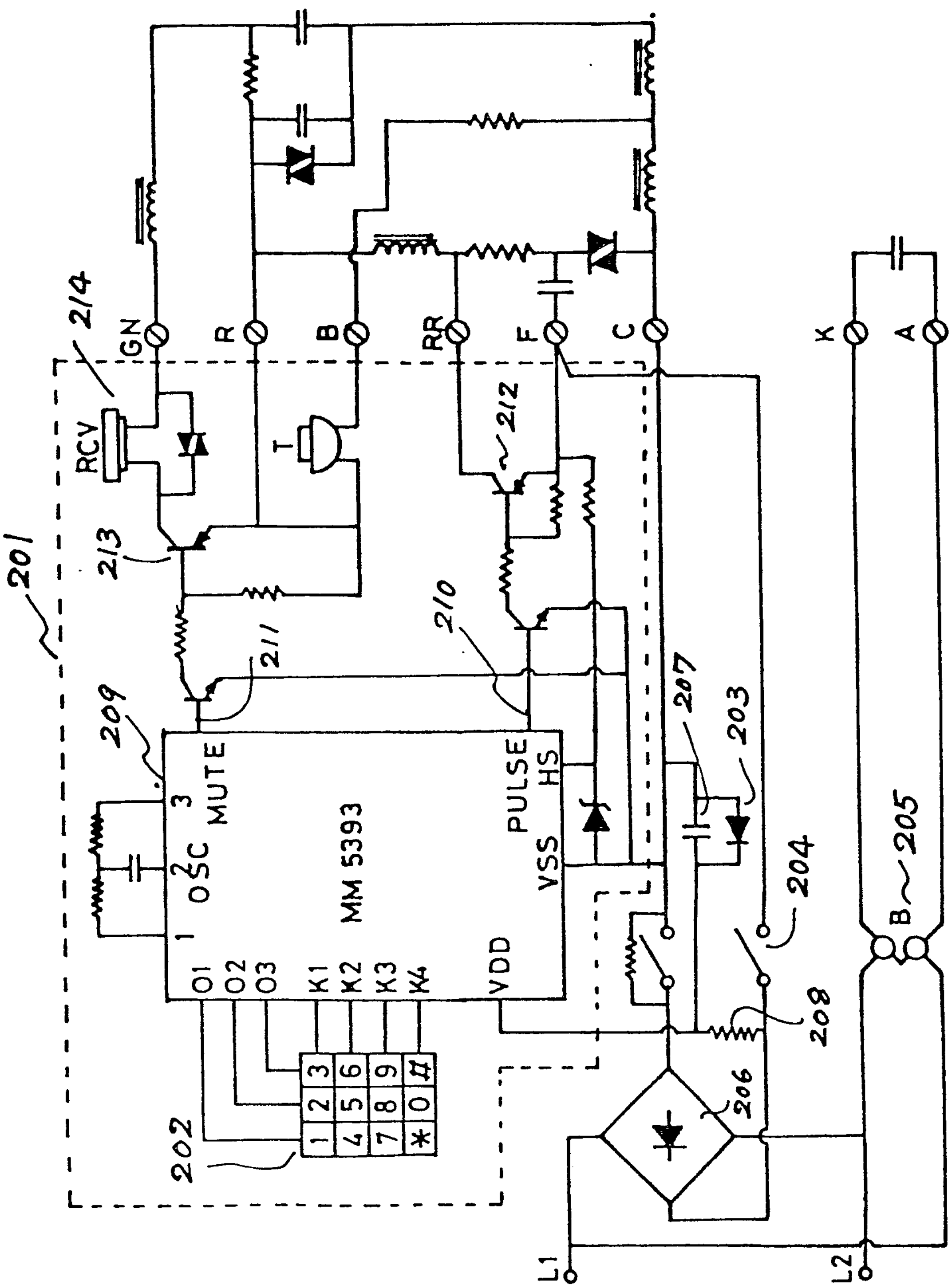
201
202
203
204
205
206
207
208
209
210
211
212
213
214
RCV
T
MM 5393
1
2
3
OSC
MUTE
PULSE
HS
VSS
VDD
O1
O2
O3
K1
K2
K3
K4
1 2 3
4 5 6
7 8 9
* 0 #
GN
R
B
RR
F
C
K
A
B
L1
L2

FIG 6

0027302

5/5

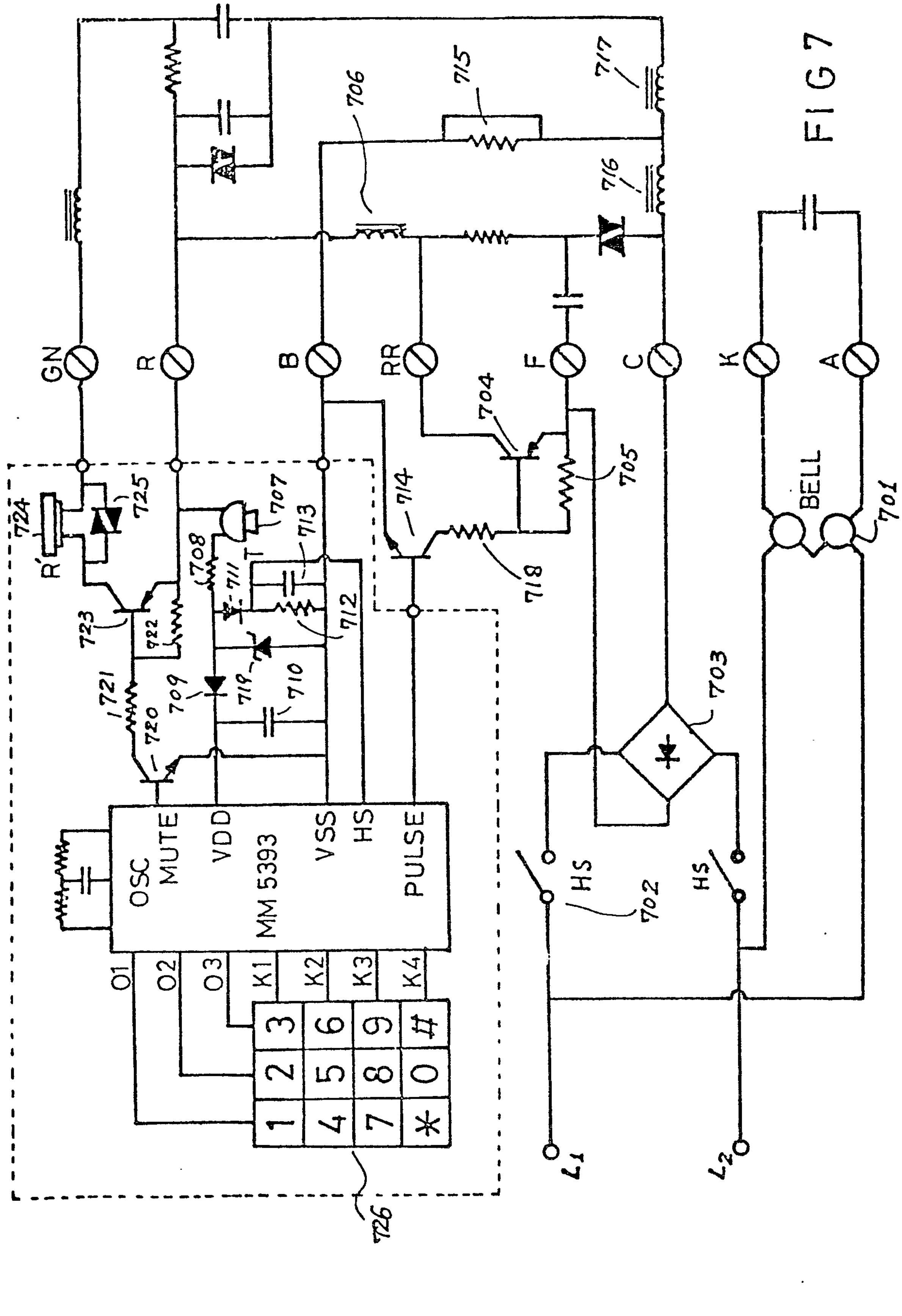


FIG 7

0027302

European Patent Office

# EUROPEAN SEARCH REPORT

Application number
EP 80 30 0393

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | H 04 M 1/31 |
| | DE - A - 2 622 732 (FRIEDRICH MERK)<br>* Page 5, line 17 to page 13, line 4; figures *<br>-- | 1-3 | |
| | FR - A - 2 239 828 (INTERNATIONAL STANDARD ELECTRIC)<br>* Page 2, line 17 to page 6, line 37; figures *<br>-- | 1-3 | TECHNICAL FIELDS SEARCHED (Int. Cl.3) |
| | FR - A - 2 282 198 (T.R.T.)<br>* Page 2, line 34 to page 8, line 35; figures *<br>---- | 1-3 | H 04 M 1/31<br>19/08 |
| | | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | The present search report has been drawn up for all claims | | &: member of the same patent family, corresponding document |

| Place of search | Date of completion of the search | Examiner |
|---|---|---|
| The Hague | 15-01-1981 | KEPPENS |